# EUROPÄISCHE PATENTSCHRIFT

(11) **EP 0 888 932 B1**
(45) Veröffentlichungstag und Bekanntmachung des Hinweises auf die Patenterteilung: **02.01.2002**
(21) Anmeldenummer: 98110911.9
(22) Anmeldetag: 15.06.1998
(51) Int. Cl.: B60R 21/00, B60R 21/32

(54) **Verfahren und Einrichtung zur Auslösung des Airbagsystems bei einem Personenkraftwagen**
Method and apparatus to inflate an airbag system of a passenger vehicle
Méthode et appareillage pour déployer un système airbag de véhicule à passagers

(30) Priorität: 04.07.1997 DE 19728576
(43) Veröffentlichungstag der Anmeldung: 07.01.1999
(73) Patentinhaber: Volkswagen Aktiengesellschaft, 38436 Wolfsburg (DE)
(72) Erfinder: Schwant, Wilfried, Dipl.-Ing., 38536 Meinersen (DE)

(56) Entgegenhaltungen:
- WO-A-98/05543
- DE-A- 4 008 960
- DE-A- 4 016 610
- DE-A- 19 625 730
- FR-A- 2 744 548
- US-A- 5 549 323
- US-A- 5 612 876
- US-A- 5 698 828

## Beschreibung

Die Erfindung betrifft ein Verfahren sowie eine Einrichtung zur Auslösung des Airbagsystems bei einem Personenkraftwagen, gemäß Oberbegriff der Patentansprüche 1 und 6.

Die mittlerweile pflichtmäßig eingeführten Airbagsysteme in Personenkraftfahrzeugen dienen zum Schutz der Fahrzeuginsassen, insbesondere von Fahrer und mittlerweile auch Beifahrer, bei einem Aufprallunfall. Hierzu sind verschiedene Sensoren bzw. verschiedene Sensormethoden bekannt, das eigentliche Ereignis, nämlich den Aufprall zu detektieren und den Airbag auszulösen. Der Airbag besteht aus einem Luftkissen, welches im Falle des Aufpralls explosionsartig aufgeblasen wird. Die gesamte Aktion muß in einigen wenigen Millisekunden ablaufen. Dies bedeutet, daß der Airbag während des Aufblasvorganges für wenige Augenblicke extrem hart ist. Dies wiederum bedeutet, daß in diesem Augenblick keine Berührung des Insassen mit dem Airbag stattfinden sollte. Das bedingt eine genau koordinierte Aktivierung des Airbags. Mittlerweile wird dies durch sogenannte Gurtstraffungssysteme unterstützt, mit denen man versucht, die Fahrzeuginsassen kurz vor oder während der Aktivierung des Airbags in eine bestmögliche Sollposition zu bringen. Hierzu bedarf es einer genauen zeitlichen Koordination der einzelnen Aktionen.

Die Auslösung des Airbags wird, wie aus der DE 3937376 C 2 bekannt, durch sogenannte Beschleunigungssensoren generiert. Das heißt physikalisch, daß der Airbag dann ausgelöst wird, wenn die durch einen Aufprall verursachte Verformung des Fahrzeuges bereits beginnt. Zu diesem Zeitpunkt setzt die Negativbeschleunigung der Fahrzeuginsassen durch den Aufprall ein. Die Gurtstraffungssysteme werden zu diesem Zeitpunkt ausgelöst und bringen die Fahrzeuginsassen, insbesondere Fahrer und Beifahrer, in eine angenäherte Sollposition. Sodann zündet der Airbag und wird innerhalb weniger Millisekunden aufgeblasen und soll sodann einen Aufprall der besagten Fahrzeuginsassen auf Armaturenbrett bzw. Windschutzscheibe oder Lenkvorrichtung, verhindern.

Aus dem Stand der Technik sind aus der DE 3802159 C 2 Sitzbelegungssensoren sowie Sensoren zur Entfernungsmessung zwischen Airbagauslösevorrichtung und Fahrzeuginsasse bekannt. Sitzbelegungssensoren sollen zunächst erfassen, ob der entsprechende Sitz, dem ein Airbag zugeordnet ist, überhaupt belegt ist. Darüber gesteuert wird demzufolge lediglich die Verfügbarkeit bzw. die Notwendigkeit des jeweiligen sitzplatzzugeordneten Airbags. Entfemungssensoren hingegen sollen feststellen, ob der Fahrzeuginsasse kurz vor dem Auslösevorgang des Airbags eine akzeptable Sollsitzposition einnimmt.

Zu berücksichtigen ist hierbei der Aktionsweg bzw. der Hub des Airbags. Darüber hinaus sind personenspezifische Parameter, wie Körpergröße, sowie auch Körperausmaße maßgebend, ob der Fahrzeuginsasse möglicherweise bereits durch die Aufblasaktion des Airbags gefährdet ist.

Mit dieser "Out-of-Position" - Problematik befaßt sich auch die DE 4320147 A1. Dort wird mit Hilfe von sogenannten Precrash-Sensoren die aktuelle Position des oder der zu schützenden Fahrzeuginsassen ermittelt und bei einem drohenden oder durch Negativbeschleunigung bereits beginnenden Aufprall, zunächst ein Positionierungsairbag gezündet, der den oder die Insassen in die gewünschte Rückhalteposition bewegt und sodann erst der Hauptairbag in Aktion tritt. Ein solches System erfüllt sicherlich einen hohen Sicherheitsstandard, die Koordination der beiden aufeinanderfolgenden Aktionen ist jedoch nur aufwendig zu realisieren. Desweiteren befaßt sich dieser Stand der Technik lediglich mit der Problematik der Rückbringung des Fahrzeuginsassen auf eine gewünschte Sollposition, bevor der Hauptairbag gezündet wird.

Aus der US 5330226 ist ein System zur Unterstützung des Airbags im Rahmen der oben bereits dargestellten Problematik bekannt, bei dem Infrarotsensoren zur Erfassung von Fahrzeuginsassendaten verwendet werden. Die dabei ermittelten Daten bzw. Parameter beziehen sich auf Körpergröße, Körperausmaße, Sitzhaltung etc.

Desweiteren sind aus der WO 95/11819 Sensoreinrichtungen zur Überwachung des Airbagauslösevorganges, abhängig von oben bereits beschnebenen Fahrzeuginsassendaten, dargestellt. Dabei sind die einzelnen Maßnahmen in logischer Abhängigkeit verschiedener Situationsdaten beschrieben. Desweiteren erfolgt eine gewisse hierarchische Unterordnung der einzelnen Elemente der Steuereinrichtung sowie der Bewertung der Sensorsignale.

Aus der gattungsbildenden EP 0738633 A 1 sind ebenfalls Abstandssensoren zur Sitzpositionserkennung sowie zur Erkennung von Hindernissen im Aktionsweg bzw. Aktionsbereich des Airbags dargestellt. Solche Hindernisse im Aktionsweg können Rückenlehnen von rückwärtig aufgestellten Kindersitzen sein, oder die Hindernisse können sich daraus ergeben, daß beispielsweise Kleinwüchsige oder Kinder auf verwendeten Sitzerhöhungshilfen platzgenommen haben und somit von einer idealen Sitzposition abweichen. Diese kann dann auch durch entsprechende Rückbringungsmittel im Falle des Aufpralles nicht wieder hergestellt werden. Eine Airbagauslösung sollte in solchen Fällen unterbleiben. Mit einer solchen Realisierung beschäftigt sich die besagte EP 0738633. Nachteilig hierbei ist, daß zum einen lediglich größere Gegenstände im Aktionsbereich des Airbags erkannt werden können und zum anderen die Verwendung von Infrarotsensoren nicht unter allen im Fahrzeug möglichen Situationen zuverlässig ist.

Darüberhinaus bleibt zu berücksichtigen, daß sich die Arme bzw. die Hände des fahrzeugführenden Insassen naturgemäß am Lenkrad befinden bzw. befinden sollten.

Insofern ist eine infrarotgenerierte Abtastung von Hindernissen im Aktionsbereich des Airbags unter Umständen gefährlich, da bereits die normale Greifhaltung des Fahrzeugführers am Lenkrad dazu führen könnte, daß das Infrarotsystem grundsätzlich ein Hindernis im Aktionsbereich sieht und die Airbagauslösung im Falle eines Aufpralles unterbleibt

Die Greifhaltung des Fahrzeugführers während des Aufpralles bzw. des Auslösezeitpunktes des Airbags ist von grundsätzlicher Bedeutung. Eine unglückliche Greifhaltung der Arme bzw. Hände, kann dazu führen, daß während des Auslösevorganges des Airbags dem Fahrzeugführer seine eigenen Hände bzw. Unterarme mit ungeheurer Wucht gegen den Kopf geschleudert werden. Dies führt zu Verletzungen in ganz erheblichem Maß. Zudem ist aus Unfallstatistiken bekannt, daß eine Reihe von Unfällen, insbesondere Aufprallunfälle, bei hoher Geschwindigkeit entstehen. Beispielsweise generiert ein entsprechend kräftiger Auffahrunfall auf der Autobahn bereits das Airbagsystem, wobei der Aufprall als solches das Fahrzeug jedoch nicht zum Stand bringt. Das heißt, nach Airbagauslösung muß der Fahrzeugführer noch eine Möglichkeit zur Kontrolle des Fahrzeuges bis zum Ausrollen desselben haben.

Von dieser Problematik ausgehend liegt der Erfindung demnach die Aufgabe zugrunde, bei einem Verfahren sowie einer Einrichtung zur positionsabhängigen Auslösung des Airbagsystems der gattungsgemäßen Art mit einfachen und damit sicherheitsmäßig hochverfügbaren Mitteln bzw. Verfahrensmaßnahmen die Entscheidung der Airbagauslösung zusätzlich von der Greifhaltung des Fahrzeugführers am Lenkrad abhängig zu machen.

Die gestellte Aufgabe wird bei einem Verfahren der gattungsgemäßen Art erfindungsgemäß durch die kennzeichnenden Merkmale des Patentanspruches 1 gelöst. Weitere vorteilhafte Aufgestaltungen des Verfahrens sind in den Ansprüchen 2 bis 5 angegeben.

Hinsichtlich einer Einrichtung der gattungsgemäßen Art wird die gestellte Aufgabe erfindungsgemäß durch die kennzeichnenden Merkmale des Einrichtungsanspruches 6 gelöst. Weitere vorteilhafte Ausgestaltungen der erfindungsgemäßen Einrichtung sind in den übrigen abhängigen Ansprüchen angegeben.

Der Kern der Erfindung besteht darin, zusätzlich oder möglicherweise überhaupt ausschließlich Tastsensoren am Lenkrad anzuordnen. Hierbei werden jedoch keine beliebig verteilten Tastsensoren verwendet sondern das Lenkrad in erfindungsgemäßer Weise in Tastzonen unterteilt. So ist beispielsweise eine wesentliche Tastzone der mittlere Bereich des Lenkrades, der sogenannte Pralltopf. Dieser enthält, entsprechend abgedeckt, den zusammengelegten und noch nicht aktivierten Airbag. Bei einer Greif- oder Sitzhaltung, bei der der Fahrzeugführer eine oder möglicherweise beide Hände auf dem entsprechenden Pralltopf aufgelegt hält, werden nicht über Entfemungsmessung-Sensoren vorgenommen, sondern über sehr viel zuverlässigere Tastsensoren. Hierzu sind verschiedene Ausgestaltungsmöglichkeiten vorgeschlagen, die nachfolgend noch näher beschrieben sind. Darüberhinaus sind am Lenkrad wahlweise weitere Zonen vorgesehen, die in einer nachfolgenden Elektronik logisch miteinander verknüpft bzw. ausgewertet werden können. Auf diese Weise kann auch eine unglückliche Greifposition des Fahrzeugführers ermittelt werden. Dies geschieht jedoch auf erheblich zuverlässigere Art und Weise, als dies bei bekannten thermooptischen Sensoren möglich ist. Bei einer beispielsweise Überkreuz-Greifhaltung würden die entsprechend beaufschlagten Tastzonen Signale erzeugen, bzw. in denselben erzeugt werden, die bei einer entsprechend logischen Auswertung eine solche unglückliche Handstellung des Fahrzeugführers erkennt. Eine Airbagauslösung würde in solchen Situationen dann unterbleiben, damit dem Fahrzeugführer bei Airbagauslösung nicht die eigenen Hände oder Unterarme zum Kopf geschleudert werden. Eine solche erfindungsgemäße Tastzonenauswertung ist deutlich zuverlässiger als eine thermooptische Erfassung der Sitzposition des Fahrzeugführers. Zudem sind die besagten erfindungsgemäß verwendeten Tastsensoren, wie sie im übrigen weiter ausgestaltet noch nachfolgend beschrieben sind, deutlich zuverlässiger als Infrarotsysteme. Dies nicht zuletzt deshalb, weil die Abhängigkeit von Umgebungsparametern wie Temperatur, Fahrzeugvibration, oder möglicherweise nicht ortsgebundene lose Gegenstände im Fahrzeuginneren zu einer Fehldeutung der aktuellen Situation führen könnten. Dies ist beim Einsatz der dargestellten Erfindung gänzlich ausgeschlossen.

Es ist im übrigen bei den meisten heutigen elektronischen Systemen in Fahrzeugen üblich, bei Inbetriebnahme des Fahrzeuges sämtliche Sensorik und sämtliche Fühler einem kurzen Testlauf zu unterziehen. Die Tastsensoren lassen sich auf extrem zuverlässige Weise auf Funktionstauglichkeit in einem solchen üblichen Testlauf beim Einschalten der Zündung mit einbeziehen. Dies ist als solches bei thermooptischen Sensoren, wie beispielsweise bei Infrarotdistanzsensoren, ohne weiteres nicht möglich. Bei einem Testlauf beim Einschalten des Fahrzeuges kann bei bekannten Infrarotsystemen nicht zweifelsfrei festgestellt werden, ob das aktuell ermittelte thermooptische Signal der Realität entspricht oder eine Störung vorliegt.

Bei Tastsensoren ist dies deshalb auf einfache Weise möglich, weil Tastsensoren lediglich eine binäre Information liefern, nämlich betätigt oder nichtbetätigt, d.h., im Fahrbetrieb Greifhaltung so oder so eingenommen oder nicht. In weiterer vorteilhafter Ausgestaltung des erfindungsgemäßen Verfahrens bzw. der erfindungsgemäßen Einrichtung können Verfahrensschritte bzw. Einrichtungsmittel, vorgesehen sein, durch welche, bzw. mit welchen der Fahrer beim Einnehmen einer ungeeigneten Greifhaltung eine akustische, optische oder ggf. sogar eine Sprachwarnung erhält.

Dies führt dazu, daß dem Fahrzeugführer zur Gewährleistung seiner eigenen Sicherheit eine bessere bzw. sicherere Greifhaltung antrainierbar ist.

Weitere Vorteile ergeben sich weiter unten im Zusammenhang mit dargestellten Ausführungsbeispielen.

Die Erfindung ist nachfolgend hinsichtlich ihrer verfahrensgemäßen Systematik sowie der einrichtungsgemäßen Realisierung dargestellt.

Es zeigt:
- Figur 1:: Logische Einbindung des erfindungsgemäßen Verfahrens in die Betätigung des Airbags.
- Figur 2:: Ausführungsbeispiel für die Anordnung bzw. Verteilung von zweckmäßig angeordneten Tastzonen am Lenkrad.
- Figur 3:: Tastsensorfeld mit druckabhängigen Schaltelementen.
- Figur 4:: Kapazitives Tastsensorfeld.

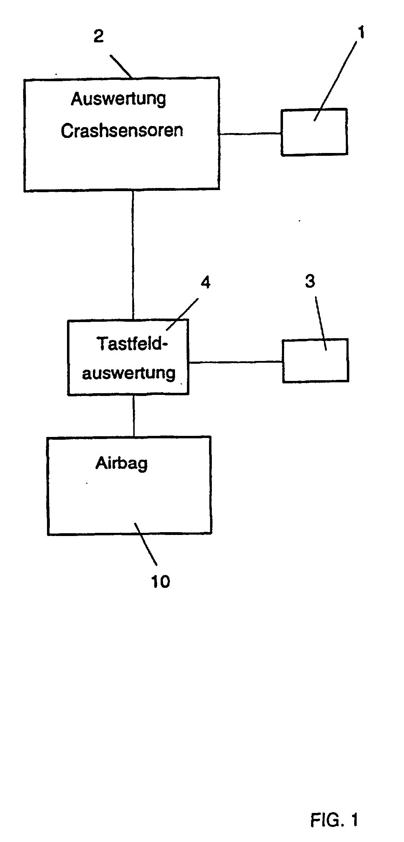

Figur 1 zeigt schematisch die logische Verknüpfung der einzelnen erfindungsgemäßen Verfahrensmaßnahmen. Schematisch dargestellt sind die Beschleunigungssensoren oder Crashsensoren 1, die im wesentlichen den Aufprall signalisieren und die Airbagzündung auslösen sollen. Diese Signale gehen entweder direkt zu der Zündvorrichtung des Airbags 10, die hier nicht weiter dargestellt ist, oder die Signale der Beschleunigungssensoren werden gemeinsam, beispielsweise mit Temperatursignalen oder anderen, in einer Sensorauswerteeinrichtung 2 für die Airbagauslösung gesammelt und bewertet. In erfindungsgemäßer Weise wird in dem eigentlichen Auslösepfad die erfindungsgemäße Tastsensorik 3 am Lenkrad des Kraftfahrzeuges derart eingebracht, daß eine entsprechende Airbagzündung bei Erzeugung der besagten Tastsignale unterbleibt, obwohl die Beschleunigungssensoren 1 den Airbagauslösevorgang generiert haben. In vorteilhafter Ausgestaltung des Verfahrens können die Tastsensoren 3 auch noch mit einer logischen Tastfeldauswertung 4 bewertet werden. Diese Bewertung wird dann korreliert mit dem eigentlichen Zündsignal. Auf diese Weise ist gewährleistet, daß eine Airbagauslösung auch im Fall eines Aufpralles dann unterbleibt, wenn die Greifhaltung des Fahrzeugführers gefährlich ist. Solche gefährlichen Greifhaltungen können zum Beispiel das Auflegen einer oder beider Hände auf den Pralltopf sein, in dem der Airbag zusammengefaltet angeordnet ist. Eine Zündung des Airbags in diesem Fall würde dem Fahrzeugführer die Hände bzw. die Arme mit extrem großer Wucht an den Kopf schleudern. Ebenso gefährlich ist die Haltung einer oder beider Hände auf der sogenannten 12-Uhr-Stellung. Eine Airbagauslösung bei dieser Greifhaltung würde ebenfalls die Hände bzw. die Arme an den Kopf des Fahrzeugführers schleudern.

Durch die entsprechend dargestellte erfindungsgemäße Verfahrensweise unterbleibt wie beschrieben die Zündung des Airbags auch in dem Fall, daß die Beschleunigungssensoren oder die sogenannten Crash-Sensoren einen Unfall melden.

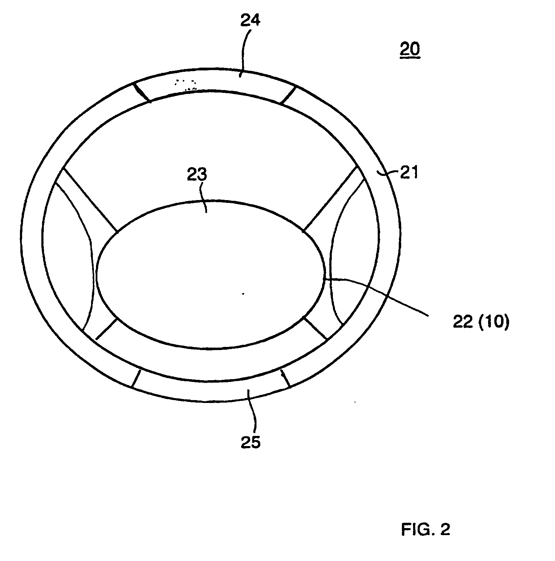

Figur 2 zeigt ein Ausführungsbeispiel hinsichtlich der Anordnung der Tastzonen am Lenkrad eines Personenkraftfahrzeuges. Das Lenkrad 20 besteht in bekannter Weise aus einem Greifring 21, der in der Regel rund sein kann, aber auch andere Formen haben kann, sowie einem mittleren Bereich, dem sogenannten Pralltopf 22.

In dem Pralltopf 22 ist der Airbag 10 mit der eigentlichen Zündvorrichtung angeordnet. In erfindungsgemäßer Weise ist eine der wesentlichen Tastzonen 23 mehr oder weniger ganzflächig auf dem den Airbag 10 enthaltenden Pralltopf 22 angeordnet.

Weitere Tastzonen können am eigentlichen Lenkrad 21 im Bereich der 12-Uhr-Stellung angeordnet sein, wobei diese besagte Tastzone mit 24 gekennzeichnet ist. Bei einem Greifen auf die Tastzonen 23 und/oder 24 wird ein entsprechendes Tastsignal erzeugt, und eine ggf. ausgelöste Airbagauslösung unterbleibt solange, solang diese Greifhaltung eingenommen bleibt.

Eine weitere Tastzone 25 könnte beispielsweise in der 6-Uhr-Position des Lenkrades angeordnet sein. Zur Deutlichkeit sei hier gesagt, daß die Lenkradposition, wie in Figur 2 dargestellt, die Lenkradposition für die Geradeausfahrt darstellt, d.h., daß bei Kurvenfahrt durchaus auch die Tastzone 25 sich oberhalb des Pralltopfes 22 befinden kann und in diesem lenkbetätigten Zustand des Lenkrades eine Greifhaltung auf dieser Tastzone 25 bei Airbagauslösung ebenfalls ein Schleudern der Hände bzw. Arme an den Kopf des Fahrzeugführers zur Folge hätte.

Insgesamt ist also wichtig, hier zu bemerken, daß die Betätigung der Tastzonen die Airbagauslösung nur temporär unterdrückt, nämlich nur so lange, solange die Tastzonen betätigt sind. Vorteilhaft ist, wie bereits oben beschrieben, die Berührung der Tastfelder, auch während der störungsfreien Fahrt mit einer akustischen oder optischen Warnung zu versehen, die dem Fahrzeugführer signalisiert, daß er eine gefährliche Greifhaltung am Lenkrad einnimmt. Insofern erfüllt diese erfindungsgemäße Ausgestaltung eine Doppelaufgabe, zum einen bei tatsächlich gefährlicher Greifhaltung eine Airbagauslösung zu unterdrücken, und zum anderen den Fahrzeugführer zur Einnahme einer geeigneten sicheren Greifhaltung zu trainieren.

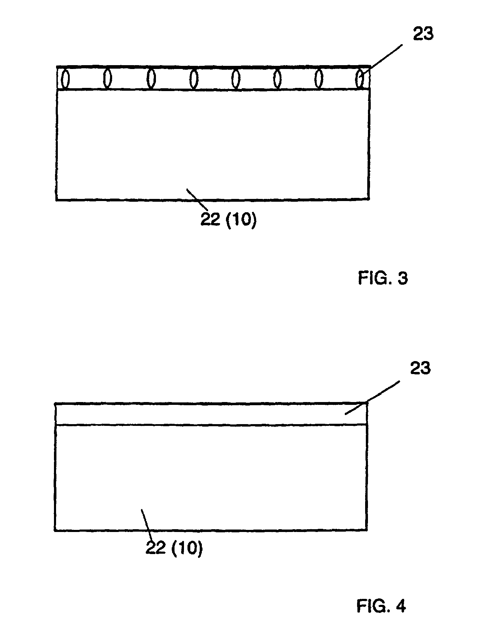

Figur 3 zeigt ein erstes Ausführungsbeispiel zur eigentlichen Realisierung der besagten erfindungsgemäßen Tastsensorfelder. Hier sei beispielhaft ein Schnitt durch einen Pralltopf gezeigt. Der obere Teil stellt das eigentliche Tastfeld 23 dar, welches aus einer geschlossenen Oberfläche mit darunter angeordneten druckempfindlichen Sensoren besteht. Bei der Berührung des Tastfeldes 23 werden die besagten Drucksensoren beaufschlagt und erzeugen ein Tastsignal. Der untere Teil stellt nur schematisch den Pralltopf 22 mit dem darin beinhalteten Airbag 10 dar. Die Drucksensoren sind über die Fläche, die tastempfindlich sein soll, verteilt angeordnet.

Figur 4 zeigt eine weitere Ausführungsform, bei der das Tastfeld aus einem kapazitiv angelegten Tastsensorfeld besteht. Dies wird dadurch realisiert, daß innerhalb des Tastfeldes, also zwischen dem feststehenden Teil also dem Pralltopf 22 sowie der Oberfläche des Tastfeldes ein Dielektrikum eingebracht ist und die besagte Oberfläche des Tastfeldes 23 und die entsprechend gegenüberliegende Grenzfläche am Pralltopf 22 metallisiert sind, so daß das Tastsensorfeld kapazitiv arbeitet. Bei der Berührung der Oberfläche des Tastfeldes 23 wird die elektrische Kapazität durch Abstandsänderung der beiden metallisierten Flächen zueinander geändert und ein entsprechendes Tastsignal erzeugt. Die weitere Konditionierung des Tastsignales ist in den Ausführungsbeispielen gemäß Figur 3 und Figur 4 hier nicht weiter dargestellt, da sie mit üblichen Verstärkermitteln vorgenommen wird.

Weitere Ausführungsbeispiele für die Ausgestaltung des Tastfeldes können beispielsweise thermische Berührungssensoren oder dergleichen sein. Wichtig ist lediglich, daß bei der Ausgestaltung des Tastfeldes gewährleistet ist, daß das Tastsignal über das gesamte Tastfeld an beliebiger Stelle erzeugbar ist. D. h., das Greifen im Randbereich des Tastfeldes muß ein eben solches Signal erzeugen, als das Greifen inmitten desselben.

Jedwede Ausführungsform der besagten Tastfelder kann in zweckmäßiger Weise eingebunden werden in den Prüflauf der Fahrzeugelektronik, die bekannterweise vor jeder bzw. bei jeder Inbetriebnahme des Personenkraftfahrzeuges abläuft. Auf diese Weise können die Tastzonen vor jeder Inbetriebnahme geprüft werden. Die Prüfung der Tastzonen erfolgt notorisch, d.h. zwangsläufig und der Fahrzeugführer erzeugt das Quittierungssignal für den Prüflauf einfach durch einmaliges Antasten der Tastzonen. Ebenfalls ist es zweckmäßig, in die Auswertung der Tastzonensignale die Drehstellung des Lenkrades mit einzubeziehen, um eine tatsächlich gefährliche Greifhaltung auch in Abhängigkeit der Drehstellung des Lenkrades erkennen zu können.

## Patentansprüche

1. Verfahren zur Auslösung des Airbagsystems bei Personenkraftfahrzeugen, bei welchem die Entscheidung und ggf. das Unterdrücken der Zündung des Airbags (10) sowohl von der Bewertung aufprallabhängiger Sensorsignale (1) als auch von der Bewertung sitzhaltungsbezogener Sensorsignale abhängig gemacht wird,
**dadurch gekennzeichnet,**
**daß** die sitzhaltungsbezogenen Sensorsignale durch tastzonenabhängige Erfassung der Greifhaltung des Fahrzeugführers am Lenkrad erzeugt bzw. ergänzt werden und bei Erkennung einer gefährlichen Greifhaltung eine Airbagzündung für die Dauer der Tastbetätigung unterdrückt wird.

2. Verfahren zur Auslösung des Airbagsystems nach Anspruch 1,
**dadurch gekennzeichnet,**
**daß** eine oder mehrere Tastzonen-Signale in einer Auswerteelektronik derart verarbeitet werden, daß daraus die Position der Unterarme des Fahrzeugführers ggf. im Aktionsbereich des Airbags ermittelt werden.

3. Verfahren zur Auslösung des Airbagsystems nach Anspruch 1 oder 2,
**dadurch gekennzeichnet, daß** bei Ermittlung einer ungünstigen Greifhaltung eine optische-, akustische- oder Sprach-Warnung generiert wird.

4. Verfahren zur Auslösung des Airbagsystems nach einem oder mehreren der vorhergehenden Ansprüche,
**dadurch gekennzeichnet,**
**daß** bei jeder Inbetriebnahme des Personenkraftfahrzeuges ein Prüflauf der Tastzonensensoren automatisch erfolgt, derart, daß der Fahrzeugführer die Tastzonen jeweils einmal betätigen muß, um ein Quittierungssignal für den Prüflauf zu erzeugen.

5. Verfahren nach einem oder mehreren der vorhergehenden Ansprüche,
**dadurch gekennzeichnet,**
**daß** die Tastzonensignale in der Auswerteeinheit mit einem Drehstellungssignal des Lenkrades zur Erkennung einer für die Airbagauslösung gefährlichen Greifhaltung korreliert wird.

6. Einrichtung zur Auslösung des Airbagsystems bei Personenkraftfahrzeugen, mit einer Airbagzündvorrichtung sowie mit Sensoren (1) zur Erzeugung aufprallabhängiger und gegebenenfalls sitzhaltungsbezogener Signale, mit Mitteln (2) zur Bewertung der besagten Signale und zur Erzeugung eines Airbagzündsignales,
**dadurch gekennzeichnet,**
**daß** mindestens ein tastempfindliches Sensorfeld (23) am Lenkrad (20) des Personenkraftfahrzeuges angeordnet ist, welches bei Berührung die Erzeugung des Airbagzündsignales unterdrückt.

7. Einrichtung zur Auslösung des Airbagsystems bei Personenkraftfahrzeugen nach Anspruch 6,
**dadurch gekennzeichnet,**
**daß** sich das tastempfindliche Sensorfeld (23) mindestens teilweise auf der dem Fahrzeugführer zugewandten Seite des Pralltopfes (22) des Lenkrades (20) erstreckt.

8. Einrichtung zur Auslösung des Airbagsystems bei Personenkraftfahrzeugen nach Anspruch 6 oder 7,
**dadurch gekennzeichnet,**
**daß** ein weiteres tastempfindliches Sensorfeld (24) auf dem Greifring (21) Lenkrades im Bereich der bei Geradeausstellung des Lenkrades (20) definierten 12-Uhr-Stellung angeordnet ist.

9. Einrichtung zur Auslösung des Airbagsystems bei Personenkraftfahrzeugen nach einem oder mehreren der Ansprüche 6 bis 8,
**dadurch gekennzeichnet,**
**daß** ein weiteres tastempfindliches Sensorfeld (25) auf dem Greifring (21) des Lenkrades im Bereich der bei Geradeausstellung des Lenkrades (20) definierten 6-Uhr-Stellung angeordnet ist.

10. Einrichtung zur Auslösung des Airbagsystems bei Personenkraftfahrzeugen nach einem oder mehreren der Ansprüche 6 bis 9,
**dadurch gekennzeichnet,**
**daß** das tastempfindliche Sensorfeld bzw. die tastempfindlichen Sensorfelder (23,24,25) aus einer Anordnung von flächig verteilten Drucksensoren bestehen, die von einer materialgeschlossenen Oberfläche bedeckt sind und bei Tastbetätigung ein auf einer lokalen Druckänderung basierendes Tastsignal generieren.

11. Einrichtung zur Auslösung des Airbagsystems bei Personenkraftfahrzeugen nach einem oder mehreren der Ansprüche 6 bis 9,
**dadurch gekennzeichnet,**
**daß** das tastempfindliche Sensorfeld bzw. die tastempfindlichen Sensorfelder (23,24,25) aus zwei metallisierten Schichten mit dazwischenliegendem Dielektrikum bestehen, welche bei Tastbetätigung ein auf einer Kapazitätsänderung basierendes Tastsignal generieren.

12. Einrichtung zur Auslösung des Airbagsystems bei Personenkraftfahrzeugen nach einem oder mehreren der Ansprüche 6 bis 9,
**dadurch gekennzeichnet,**
**daß** die tastempfindlichen Sensorfelder aus thermisch empfindlichen Berührungssensoren bestehen.

13. Einrichtung zur Auslösung des Airbagsystems bei Personenkraftfahrzeugen nach einem oder mehreren der Ansprüche 6 bis 12,
**dadurch gekennzeichnet,**
**daß** die tastempfindlichen Sensorfelder (23,24,25) mit Mitteln zur Erzeugung einer optischen, akustischen oder Sprach-Warnung logisch verschaltet sind.

14. Einrichtung zur Auslösung des Airbagsystems bei Personenkraftfahrzeugen nach einem oder mehreren der Ansprüche 6 bis 13,
**dadurch gekennzeichnet,**
**daß** das Lenkrad (20) mit einem Drehstellungsgeber versehen ist, über welchen in Verbindung mit den Signalen der tastempfindlichen Sensorfelder (23,24,25) die Greifhaltung des Fahrzeugführers in Relation zum Airbagaktionsbereich ermittelbar ist.

## Claims

1. Method of actuating the airbag system in passenger vehicles, wherein the decision to trigger, and possibly to suppress triggering of the airbag (10) is made in dependence both upon evaluation of impact-dependent sensor signals (I) and also upon evaluation of sitting position-related sensor signals,
**characterised in that**
the sitting position-related sensor signals are produced and/or supplemented by touch zone-dependent sensing of the way the vehicle driver is gripping the steering wheel, and upon recognition of a dangerous gripping manner the triggering of the airbag is suppressed throughout the touch actuation.

2. Method of actuating the airbag system according to claim 1,
**characterised in that**
one or more touch zone signals is/are processed in evaluation electronics in such a way that the position of the forearms of the vehicle driver possibly within the operating region of the airbag is detected therefrom.

3. Method of actuating the airbag system according to claim 1 or 2,
**characterised in that** upon detection of an unfavourable gripping manner a visual, audible or vocal warning is generated.

4. Method of actuating the airbag system according to one or several of the preceding claims,
**characterised in that**
each time the passenger vehicle is put into operation a test run of the touch zone sensors automatically takes place in such a way that the vehicle driver must actuate each of the touch zones once in order to produce an acknowledge signal for the test run.

5. Method according to one or several of the preceding claims,
**characterised in that**
the touch zone signals is [sic] correlated in the evaluation unit with a rotational position signal for the steering wheel in order to recognise a gripping manner which is dangerous if the airbag is actuated.

6. Device for actuating the airbag system in passenger vehicles, having an airbag triggering device and having sensors (1) for producing impact-dependent and possibly sitting position-related signals, having means (2) for evaluating the said signals and for producing an airbag triggering signal,
**characterised in that**
at least one touch-sensitive sensor field (23) is disposed on the steering wheel (20) of the passenger vehicle, which, when touched, suppresses the production of the airbag triggering signal.

7. Device for actuating the airbag system in passenger vehicles according to claim 6,
**characterised in that**
the touch-sensitive sensor field (23) extends at least partially on the side, facing the vehicle driver, of the impact boss (22) of the steering wheel (20).

8. Device for actuating the airbag system in passenger vehicles according to claim 6 or 7,
**characterised in that**
a further touch-sensitive sensor field (24) on the gripping ring (21) [of the] steering wheel is disposed in the region of the 12 o'clock position defined when the steering wheel (20) is in the straight-ahead position.

9. Device for actuating the airbag system in passenger vehicles according to one or several of claims 6 to 8,
**characterised in that**
a further touch-sensitive sensor field (25) is disposed on the gripping ring (21) of the steering wheel in the region of the 6 o'clock position defined when the steering wheel (20) is in the straight-ahead position.

10. Device for actuating the airbag system in passenger vehicles according to one or several of claims 6 to 9,
**characterised in that**
the touch-sensitive sensor field or the touch-sensitive sensor fields (23, 24, *25)* consist of an arrangement of pressure sensors distributed over the surface, which are covered by a surface of closed material and generate a touch signal based on a local pressure change during touch actuation.

11. Device for actuating the airbag system in passenger vehicles according to one or several of claims 6 to 9,
**characterised in that**
the touch-sensitive sensor field or the touch-sensitive sensor fields (23, 24, 25) consist of two metallized layers with a dielectric therebetween, which generate a touch signal based on a change in capacitance during touch actuation.

12. Device for actuating the airbag system in passenger vehicles according to one or several of claims 6 to 9,
**characterised in that**
the touch-sensitive sensor fields consist of thermally sensitive contact sensors.

13. Device for actuating the airbag system in passenger vehicles according to one or several of claims 6 to 12,
**characterised in that**
the touch-sensitive sensor fields (23, 24, 25) are logically connected to means for producing a visual, audible or vocal warning.

14. Device for actuating the airbag system in passenger vehicles according to one or several of claims 6 to 13,
**characterised in that**
the steering wheel (20) is provided with a rotational position transmitter by which, in association with the signals from the touch-sensitive sensor fields (23, 24, 25), the gripping manner of the vehicle driver in relation to the operating region of the airbag can be detected.

## Revendications

1. Procédé destiné au déclenchement du système à airbag de véhicules automobiles, dans lequel la décision, et le cas échéant la suppression de l'activation de l'airbag (10), sont rendues dépendantes aussi bien de l'évaluation de signaux de détecteurs (1) dépendant de chocs que de l'évaluation de signaux de détecteurs relatifs à la position assise,
**caractérisé en ce que**
les signaux de détecteurs relatifs à la position assise sont générés ou complétés par la détection dépendant de zones de palpation de la position de préhension du conducteur du véhicule sur le volant, et **en ce que**, en cas de détection d'une position de préhension dangereuse, une activation de l'airbag est supprimée pendant la durée de la manoeuvre de contact.

2. Procédé destiné au déclenchement du système à airbag selon la revendication 1,
**caractérisé en ce que**
un ou plusieurs signaux de zones de palpation sont traités dans une électronique d'évaluation de telle sorte que la position des avant-bras du conducteur du véhicule soit le cas échéant déterminée dans la zone d'action de l'airbag.

3. Procédé destiné au déclenchement du système à airbag selon la revendication 1 ou 2,
**caractérisé en ce que**, lors de la détection d'une position de préhension défavorable, il est généré un avertissement optique, acoustique ou vocal.

4. Procédé destiné au déclenchement du système à airbag selon l'une ou plusieurs des revendications précédentes,
**caractérisé en ce que**
un test de fonctionnement des détecteurs des zones de palpation est effectué automatiquement lors de chaque démarrage du véhicule automobile, de telle sorte que le conducteur du véhicule n'ait à actionner qu'une seule fois les zones de palpation pour générer un signal d'acquittement pour le test de fonctionnement.

5. Procédé selon l'une ou plusieurs des revendications précédentes,
**caractérisé en ce que**,
pour la détection d'une position de préhension dangereuse pour le déclenchement de l'airbag, les signaux des zones de palpation sont mis dans l'unité d'évaluation en corrélation avec un signal de position de rotation du volant.

6. Dispositif destiné au déclenchement du système à airbag de véhicules automobiles, comportant un dispositif d'activation d'airbag ainsi que des détecteurs (1) destinés à générer des signaux dépendant de chocs, et le cas échéant des signaux relatifs à la position assise, et des moyens (2) destinés à l'évaluation desdits signaux et à la génération d'un signal d'activation de l'airbag,
**caractérisé en ce que**,
au moins un champ (23) de détecteurs sensible au toucher est disposé sur le volant (20) du véhicule automobile qui, lors d'un contact, supprime la génération d'un signal d'activation de l'airbag.

7. Dispositif destiné au déclenchement du système à airbag de véhicules automobiles selon la revendication 6,
**caractérisé en ce que**
le champ (23) de détecteurs sensible au toucher s'étend, au moins partiellement, sur la face du pot d'impact (22) du volant (20) orientée vers le conducteur du véhicule.

8. Dispositif destiné au déclenchement du système à airbag de véhicules automobiles selon la revendication 6 ou 7,
**caractérisé en ce que**
un autre champ (24) de détecteurs sensible au toucher est disposé sur l'anneau de préhension (21) du volant dans la zone de la position de 12 heures définie lorsque le volant (20) est positionné pour la marche en ligne droite.

9. Dispositif destiné au déclenchement du système à airbag de véhicules automobiles selon l'une ou plusieurs des revendications 6 à 8,
**caractérisé en ce que**
un autre champ (25) de détecteurs sensible au toucher est disposé sur l'anneau de préhension (21) du volant dans la zone de la position de 6 heures définie lorsque le volant (20) est positionné pour la marche en ligne droite.

10. Dispositif destiné au déclenchement du système à airbag de véhicules automobiles selon l'une ou plusieurs des revendications 6 à 9,
**caractérisé en ce que**
le champ de détecteurs sensible au toucher ou les champs (23, 24, 25) de détecteurs sensibles au toucher sont constitués d'une disposition de détecteurs de pression répartis en surface, qui sont recouverts d'une surface fermée par du matériau, et qui, lors d'une manoeuvre de contact, génèrent un signal de palpation basé sur une variation locale de pression.

11. Dispositif destiné au déclenchement du système à airbag de véhicules automobiles selon l'une ou plusieurs des revendications 6 à 9,
**caractérisé en ce que**
le champ de détecteurs sensible au toucher ou les champs (23, 24, 25) de détecteurs sensibles au toucher sont constitués de deux couches métallisées entre lesquelles est inséré un diélectrique qui, lors d'une manoeuvre de contact, génèrent un signal de palpation basé sur une modification de capacité.

12. Dispositif destiné au déclenchement du système à airbag de véhicules automobiles selon l'une ou plusieurs des revendications 6 à 9,
**caractérisé en ce que**
les champs de détecteurs sensibles au toucher sont constitués de détecteurs de contact sensibles à la chaleur.

13. Dispositif destiné au déclenchement du système à airbag de véhicules automobiles selon l'une ou plusieurs des revendications 6 à 12,
**caractérisé en ce que**
les champs (23, 24, 25) de détecteurs sensibles au toucher sont enchaînés logiquement avec des moyens destinés à générer un avertissement optique, acoustique ou vocal.

14. Dispositif destiné au déclenchement du système à airbag de véhicules automobiles selon l'une ou plusieurs des revendications 6 à 13,
**caractérisé en ce que**
le volant (20) est muni d'un capteur de position de rotation, par l'intermédiaire duquel la position de préhension du conducteur du véhicule peut être déterminée par rapport à la zone d'action de l'airbag en liaison avec les signaux des champs (23, 24, 25) de détecteurs sensibles au toucher.
